# EUROPEAN PATENT SPECIFICATION

(11) **EP 3 228 495 B1**
(45) Date of publication and mention of the grant of the patent: **17.06.2020**
(21) Application number: 16164490.1
(22) Date of filing: 08.04.2016
(51) Int. Cl.: B60N 2/70, B60N 2/72

(54) **CUSHION MAT AND METHOD FOR THE PRODUCTION OF A CUSHION MAT**
POLSTERMATTE UND VERFAHREN ZUR HERSTELLUNG EINER POLSTERMATTE
TAPIS D'AMORTISSEMENT ET PROCÉDÉ DE FABRICATION D'UN TAPIS D'AMORTISSEMENT

(30) Priority: 07.04.2016 EP 16164143
(43) Date of publication of application: 11.10.2017
(73) Proprietor: FICO CABLES LDA, 4470-263 Maia (PT)
(72) Inventor: DE CASTRO FARIA, Manuel António, Vermoim- Maia (PT); PINTO RIBEIRO, Susana Carla, Vermoim- Maia (PT); GONÇALVES SILVA, David Manuel, Vermoim- Maia (PT)
(74) Representative: Mader, Joachim

(56) References cited:
- WO-A1-2012/020697
- DE-A1-102007 034 187
- GB-A- 2 496 024
- JP-A- 2011 105 277
- JP-A- 2011 173 450

## Description

### 1. Field of the invention

The present invention relates to a cushion mat and method for the production of a cushion mat. The cushion mat can be integrated into an automotive seat.

### 2. Prior art

Cushion mats are used in a motor vehicle seat for supporting and suspending of a cushioning of a seat. Usually cushion mats comprise metal wires that are connected to each other form a flat elastic mat. This cushion mat is then suspended to an automotive seat frame. The comfort of the seat, a subjective perception of the passenger of a vehicle, is influenced by the properties of the cushion mat and the cushion supported thereby. Various features of the cushion mat, e.g. diameter of the wire, material characteristics, pre-tension and the like define the properties of the cushion mat. Since the passenger weight varies, an optimum cushioning behavior is hard to provide. One main characteristic of a cushion mat is the deflection of the cushion mat, i.e. the amount the cushion mat yields under the weight of a passenger. Usually such deflection has a pure elastic behavior. Then the amount of deflection in general is proportional to the normal force of the weight of the passenger.

In some cases the deflection of the cushion mat causes problems due to a small distance between seat and floor or due to the presence of other seat elements below the cushion mat.

The EP 2 374 652 A1 describes a cushion mat that comprises a set of metal wire springs and plastic links that connect them to each other.

The document US 2004/0140707 A1 discloses a vehicle seat pan for controlling the vertical deflection in order to avoid a "submarining effect". The seat pan comprises a suspension web for supporting a seat cushioning, wherein the suspension web is mounted to a seat frame. A vertical deflection controller in the form of a leaf spring or a coil spring and a metal strap that limits the extension of the spring is coupled between the non-elastic web and the frame. The deflection controller is thereby directly mounted to the seat frame and requires mounting means as for example notches in the seat frame. Thus, the system of this document requires modifications to the seat frame and a special mounting procedure. Further, due to the non-elastic web the suspension comfort is rather poor and separate spring elements are required. Thus, the mounting procedure into the seat frame for this number of separate parts is cumbersome and requires a long time.

Document GB 2496024 A describes a vehicle seat for a motor vehicle. The seat frame of the vehicle seat comprises - seen in driving direction - a front seat shell and a rear seat cross member and zigzag springs are arranged between the seat shell and the seat cross member and mounted in these, wherein two spring arrangements are connected by means of second spacer elements that are variable in length in transverse direction of the seat frame.

Document DE 10 2007 034 187 A1 describes a support mat for a back rest in a vehicle seat. The support mat comprising a single plane support element and a plurality of metallic wires, wherein the support element is injection-molded around the wires.

Document JP 2011 105277 A describes a seating detecting device including a load detecting device arranged below a cushioning member of a cushion part of a vehicle seat for detecting load information.

Document WO 2012/020697 A1 describes a vehicle seat including a seat back frame and a spring section in the seat back that is at least partially formed of resin and that is formed so as to be able to flexurally deform in a load application direction due to a load towards the seat rear side. Thereby, when the amount of flexure increases, the spring main bodies abut a wall of a limiting component that is provided at the seat back rear side.

It is therefore the problem of the present invention to provide a cushion mat that overcomes the above-mentioned problems and is easy to manufacture and can be easily and directly attached to a standard seat frame without requiring any modifications of the seat frame or complicated mounting steps. Furthermore, the deflection limitation should not have any negative effects on the suspension behavior and thus on the comfort of the automotive seat. Further, the deflection limitation must be reliable in order to prevent a collision with the floor or other seat elements.

### 3. Summary of the invention

The above-mentioned problem is solved by a cushion mat according claim 1 and a method for the production of cushion mat according to claim 15.

Particularly the above-mentioned problem is solved by a cushion mat for integration into an automotive seat, comprising a set of springs, each spring extending across the cushion mat; connectors, connecting the springs with each other to form the cushion mat; and at least one deflection stopper arranged for limiting the deflection of the cushion mat, when a predetermined deflection value is exceeded. Due to the set of springs, preferably metal wire springs having S-shaped windings, and the connectors the manufacturing of the cushion mat can be done easily, preferably by over-molding of a plastic material to form the plastic connectors. Further, the suspension comfort is increased as the suspension mat is elastic over the total length and width of the cushion mat. Likewise, the mounting of such a cushion mat can be done easily by simply extending the complete cushion mat and hooking it to a standard seat frame in one mounting step. No complicated plurality of mounting steps are required. By means of the deflection stopper the deflection is limited, such that the cushion mat does not touch other seat elements below the cushion mat or the floor of the vehicle even under heavy load of a passenger and movements of the vehicle. Since the deflection stopper is a part of the cushion mat - in contrary to the prior art - no modifications are required to the seat frame or other elements of the seat. Also, no addition mounting steps for mounting the cushion mat to the seat frame are required. In addition, the deflection stopper does not affect the initial suspension properties of the cushion mat until a predetermined deflection value is reached. Due to the deflection stopper the cushioning mat can preferably be designed such that it behaves elastic like a common cushion mat and when a predetermined deflection value of the cushion mat is exceeded the cushion mat becomes essentially non-elastic or at least a magnitude harder than below this value.

The deflection stopper comprises a flexible cable, preferably in form of an inner cable of a Bowden cable.

The deflection stopper has a length that is longer than the length of the joint points of the deflection stopper to one of the springs or to any other element of the cushion mat. Thus, the deflection stopper acts as a further spring or spring wire that begins to act when one of the springs has reached an elongation that corresponds to the predetermined deflection value of the cushion mat.

Preferably, the cushion mat can have different deflection stoppers which begin to act at different levels of deflection. Therefore, such different defection stoppers can have different lengths and / or a different modulus of elasticity and / or different joint points to the cushion mat. Thus, it is possible to define the deflection behavior of a cushion mat very precisely and individually in different areas of the same cushion mat.

Preferably, the deflection stopper has a spring constant at least 10-times higher than the spring constant of one spring. Thus, the deflection stopper is at least 10-times harder than the spring. Consequently, the deflection stopper under load extends at least 10-times less compared to the spring. In practice the deflection stopper is almost inextensible and thus the spring constant preferably is at least 100-times higher, preferably 1000-times higher, preferably 10.000-times higher than the spring constant of one spring.

Preferably, the deflection stopper is connected to one of the springs. Thus, no modification to the seat frame for the connection of the deflection stopper are required. Preferably, the deflection stopper is made of steel and is coated with a plastic material, to prevent noise emerging due to friction between the deflection stopper and the spring. Preferably, the deflection stopper comprises at least one bowed flexible portion that strains upon deflection of the wire spring. The bowed flexible portion provides a variable extension of the deflection stopper that can vary between predetermined values under load.

Preferably, the cushion mat comprises one deflection stopper per spring. Thus, the extension of each spring is individually limited by its associated deflection stopper. This allows a selective adjustment of the limitation of the deflection in different parts of the cushion mat and finally in the seat.

Preferably the spring is a metal wire spring and comprises generally S-shaped windings. Such a spring is very flat and can be easily over-molded with plastic elements to produce a very flat and unitary cushion mat.

Preferably the spring comprises at least one pair of protrusions facing each other at the same portion of the spring, for securing one end of the deflection stopper at a predetermined position at the spring. Preferably, the at least one pair of protrusions is over-molded to the wire spring. Thus, the protrusions can be over-molded together with the plastic connectors of the cushion mat. This facilitates production and eliminates further assembly steps.

Preferably the metal deflection stopper is coated with a plastic material, to prevent noise emerging due to friction between the metal of the deflection stopper and the spring.

The above-mentioned problems are also solved by a method for the production of a cushion mat for integration into an automotive seat, comprising the following steps:
a. injection molding of plastic material around a set of springs to form a cushion mat with plastic connectors;
b. providing a deflection stopper either by
c. mechanically connecting at least one deflection stopper to at least one of the springs or to any other element of the cushion mat, wherein the deflection stopper comprises a flexible cable and has a length that is longer than the length of the joint points of the deflection stopper to one of the springs or to any other element of the cushion mat.

By this method a cushion mat is achieved that has the above-mentioned advantages to the prior art systems. In addition, the method for the production can be easily performed and is thus cost efficient.

Preferably the step of attaching the deflection stopper to the spring or to any other element of the cushion mat is performed by clipping the deflection stopper to the spring or to an element of the cushion mat. This clipping is easy to perform manually and without specific tools.

Further preferred embodiments are described in the dependent claims.

### 4. Short description of the drawing

In the following a preferred embodiment of the present invention is illustrated in the accompanying figures. It shows:
- Fig. 1a: a perspective view of a cushion mat not according to the invention;
- Fig 1b: a detailed view of a part of the cushion mat of Fig. 1a, showing a first end of the deflection stopper;
- Fig. 1c: a detailed view of a part of the cushion mat of Fig.1a, showing a second end of the deflection stopper;
- Fig. 2a: a detailed view of a part of the cushion mat of Fig. 1a, illustrating the gap when no or only a small force is applied to the mat;
- Fig. 2b: a detailed view of a part of the cushion mat of Fig. 1a, illustrating the closed gap when a strong force is applied to the mat;
- Fig. 2c: a side view of Fig. 2a showing the gap;
- Fig. 3a: a perspective view of a cushion mat not according to the invention;
- Fig 3b: a detailed view of a part of the cushion mat of Fig. 3a, showing a first end of the deflection stopper;
- Fig. 3c: a detailed view of a part of the cushion mat of Fig.3a, showing a second end of the deflection stopper;
- Fig. 4a: a detailed view of a part of the cushion mat of Fig. 3a, illustrating the gap when no or only a small force is applied to the mat;
- Fig. 4b: a detailed view of a part of the cushion mat of Fig. 3a, illustrating the closed gap when a strong force is applied to the mat;
- Fig. 4c: a side view of Fig. 4a showing the gap;
- Fig. 5a: a side view of the cushion mat of Fig. 1a showing the gap in a detailed view when no force is applied to the mat;
- Fig. 5b: a side view of the cushion mat of Fig. 3a showing the gap in a detailed view when no force is applied to the mat;
- Fig. 5c: a side view of the cushion mat of Fig. 1a showing the closed gap in a detailed view when a strong force is applied to the mat;
- Fig. 5d: a side view of the cushion mat of Fig. 3a showing the closed gap in a detailed view when a strong force is applied to the mat;
- Fig. 6a: a perspective view of a cushion mat not according to the invention;
- Fig 6b: a detailed view of a part of the cushion mat of Fig. 6a, showing bowed plastic parts;
- Fig. 6c: a side view of the cushion mat of Fig. 6a showing the bowed plastic parts;
- Fig. 7a: a side view of the cushion mat of Fig. 6a showing the bowed plastic parts when no force is applied to the mat;
- Fig. 7b: a side view of the cushion mat of Fig. 6a showing the flat plastic parts when a strong force is applied to the mat;
- Fig. 8a: a perspective view of an embodiment of the cushion mat according to the invention;
- Fig 8b: a detailed view of a part of the cushion mat of Fig. 8a, showing a cable end with a rigid hook;
- Fig. 8c: a side view of the cushion mat of Fig. 8a showing an attachment clip for the cable;
- Fig. 9a: a side view of the cushion mat of Fig. 8a showing the cables when no force is applied to the mat;
- Fig. 9b: a side view of the cushion mat of Fig. 8a showing the cables when a strong force is applied to the mat;
- Fig. 10: a force-displacement diagram illustrating the limitation of the deflection or displacement in response to an increasing force above a predetermined deflection value;
- Fig. 11a: a schematic view illustrating the length / distance of the joint points versus the length of a deflection stopper according the embodiment; and
- Fig. 11b: a schematic view illustrating the length / distance of the joint points versus the length of a deflection stopper according the cushion mat of Figs. 1a to Fig. 5d.

### 5. Detailed description of the preferred embodiment

In the following a preferred embodiment of the present invention are described in detail with reference to the accompanying figures.

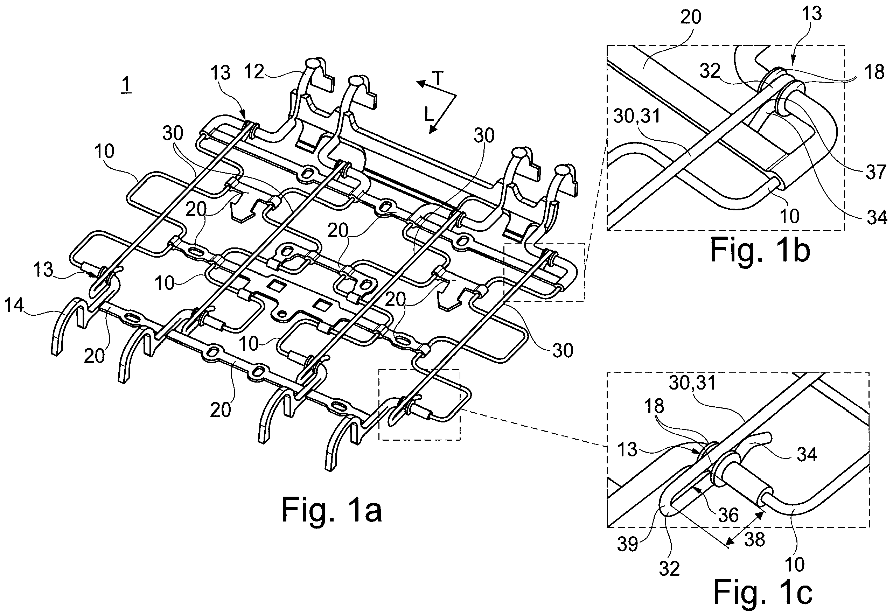

Figs. 1 - 2 and Fig. 5a and Fig. 5c show a first cushion mat 1, which is not according to the invention. As it can be seen in Fig. 1a the cushion mat 1 comprises four springs 10 that are arranged in general in lateral direction L and bend in an S-shape to provide elasticity and stability to the cushion mat 1. The springs 10 are preferably made of a spring steel wire that is bend into the desired flat shape. Between the springs 10 there are connectors 20 arranged in general in a transverse direction T to connect the wire springs 10 with each other. The connectors 20 are preferably plastic connectors 20 and are over-molded to the springs 10 and can have any appropriate strip-like appearance. The arrangement of the springs 10 and the plastic connectors 20 defines the basic structure of the cushion mat 1. Each of the springs 10 has two ends 12, 14 having a hook-shape for mounting the cushion mat 1 to a standard seat frame (not shown). In order to prevent any noise between the cushion mat 1 and the seat frame the hooks 12, 14 are coated with plastic material. Preferably, the plastic coating is made by over-molding at the same time when the connectors 20 are over-molded.

In general, in the lateral direction L, along each of the springs 10, a corresponding deflection stopper 30 is arranged. However, in all cushion mats 1 the number of deflection stoppers 30, 40, 50, 60 per cushion mat 1 may vary, for example 1, 2, 3, 4, 5, 6, 7 or 8 deflection stoppers 30, 40, 50, 60. Preferably, one deflection stopper 30, 40, 50, 60 is provided per spring 10. In this cushion mat 1 the four deflection stoppers 30 are formed by a coated wire 30. Each deflection stopper 30 is clipped to joint points 13 of the corresponding wire spring 10 at its both ends to moveably attach the deflection stopper 30 to the wire spring 10. This clipping can be done easily as the wire springs 30 are elastic in lateral direction L. The wire of the deflection stopper 30 may be coated with a plastic material 31 in order to prevent any noise due to friction between the elements during use. The deflection stoppers 30, 40, 50, 60 have a length that is longer than the distance between the joint points 13 where they are fixed to the cushion mat 1, preferably to one of the springs 10. It is possible to use deflection stoppers 30, 40, 50, 60 of different length at the same cushion mat such that they begin to work at different forces applied to the cushion mat 1. Further, the deflection stoppers 30, 40, 50, 60 can be attached to different joint points 13 such that they also begin to work at different forces applied to the cushion mat 1. In addition, the deflection stoppers 30, 40, 50, 60 can have a different elasticity or rigidity such that the effect on the cushion mat 1 can be adjusted in general and over the cushion mat 1.

Fig. 1b and Fig. 1c show detailed views of the cushion mat that illustrate the end portions of the deflections stopper 30. Each end portion of a deflection stopper 30 comprises a U-shaped end portion 32 that mounts the deflection stopper 30 to the wire spring 10. Additionally, each U-shaped end portion 32 comprises an inward protrusion 34 for clipping the deflection stopper 30 to the wire spring 10 what further secures the deflection stopper 30 at the corresponding wire spring 10. Furthermore, the over-molded end portion of each wire spring 10 can comprise a pair of protrusions 18 to hold or secure the deflection stopper 30 at a particular position. The protrusions 18 can be over-molded to the wire spring 10, preferably at the time of the over-molding of the plastic connectors 20.

At least one of the U-shaped end portions 32 of a deflection stopper 30 comprises an elongated loop 36 to enable a back and forth as well as a rotational movement of the wire spring 10 with respect to the deflection stopper 30. The end portion 32 on the other side of the same deflection stopper 30 may comprise a loop 37 to enable only a rotational movement of the wire spring 10 with respect to the deflection stopper 30 or also forms an elongated loop 36. When no or only a small force F is applied to the cushion mat 1 the elongated loop 36 forms a gap 38 between the arch 39 of the U-shaped end portion 32 and the enclosed portion 16 of the wire spring 10. When a force F is applied to the cushion mat 1 the cushion mat 1 bends and elongates and finally abuts the arch 39 of the deflection stopper 30. Thus, the gap 38 is getting smaller the higher the applied force is.

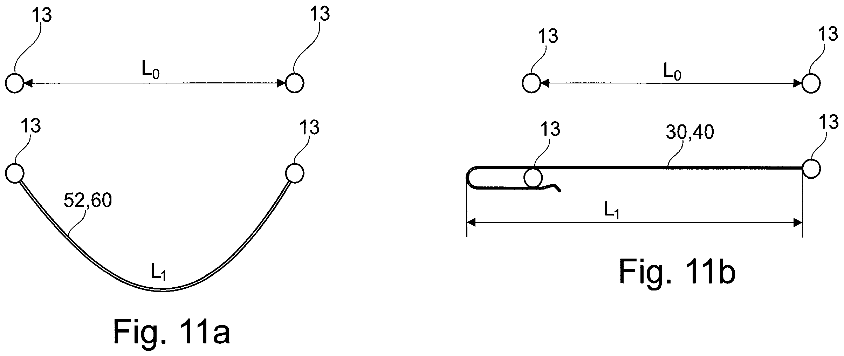

As illustrated in Fig. 11b the deflection stopper 30 has a length L₁ that is longer than the length respectively distance L₀ of the joint points 13 of the deflection stopper 30 to one of the springs 10 or to any other element of the cushion mat 1.

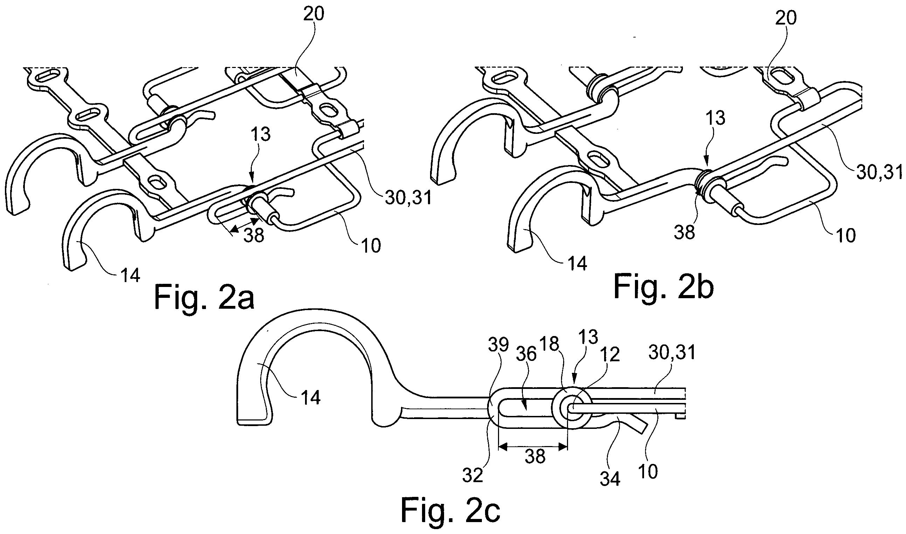

The gap 38 with a maximum width is shown in Fig. 2a. In this situation no force is applied to the cushion mat 1. The opposite case is shown in Fig. 2b where the gap 38 has the width zero due to a force F applied to the cushion mat 1. In this case the predetermined maximum deflection value di is reached and a further deflection of the cushion mat 1 is stopped due to the limited movement of the deflection stopper 30. A significant further bending down of the wire springs 10 is prevented due to the higher modulus of elasticity of the deflection stopper 30. Fig. 2c is a side view of Fig. 2a to illustrate the arrangement of the deflection stopper 30 with respect to the wire spring 10.

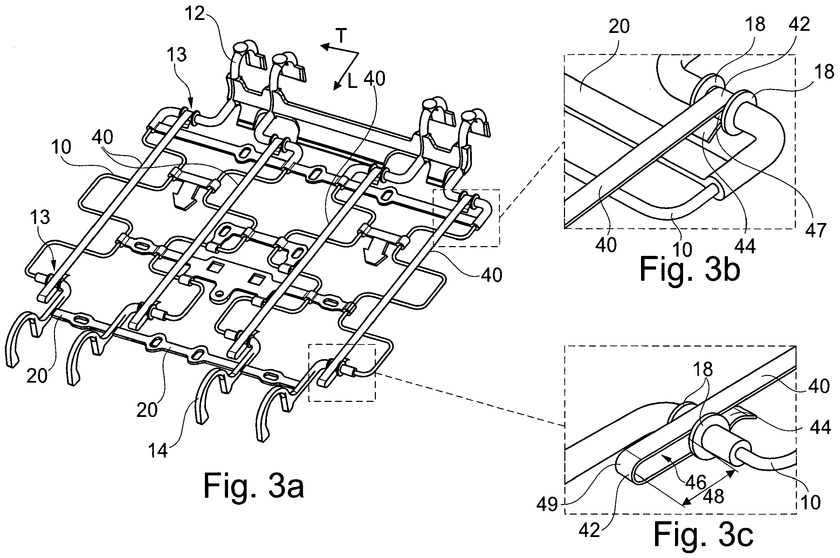

Figs. 3 - 4 and Fig. 5b und Fig. 5c a show second cushion mat 1, which is not according to the invention, in which the deflection stopper is a metal band 40, preferably a steel band. As in the first cushion mat 1 a deflection stopper 40 is arranged along a wire spring 10 in lateral direction L.

As can be seen in the detailed views of Fig. 3b and Fig. 3c each metal band 40 comprises a U-shaped end portion 42 at both ends to moveably attach the deflection stopper 40 to the wire spring 10. To increase the connection of the deflection stopper 40 at the spring 10 each U-shaped end portion 42 comprises an inward protrusion 44. At least one U-shaped end portion 42 forms an elongated loop 46 to enable a back and forth as well as a rotational movement of the spring 10 with respect to the deflection stopper 40. The other U-shaped end portion 42 of the same deflection stopper 40 may form a loop 47 that only enables a rotational movement of the spring 10 with respect to the deflection stopper 40 or it may also form an elongated loop 46.

Again, the elongated loop 46 forms a gap 48 between the arch 49 of the respective U-shaped end portion 42 and the enclosed portion 16 of the wire spring 10 when no or only a small force F is applied to the cushion mat 1. As in the first cushion mat, when a force F is applied to the cushion mat 1 the cushion mat 1 bends and elongates and finally abuts the arch 49 of the deflection stopper 40. Thus, the gap 48 is getting smaller the higher the applied force is.

As illustrated in Fig. 11b the deflection stopper 40 has a length L₁ that is longer than the length respectively distance L₀ of the joint points 13 of the deflection stopper 40 to one of the springs 10 or to any other element of the cushion mat 1**.**

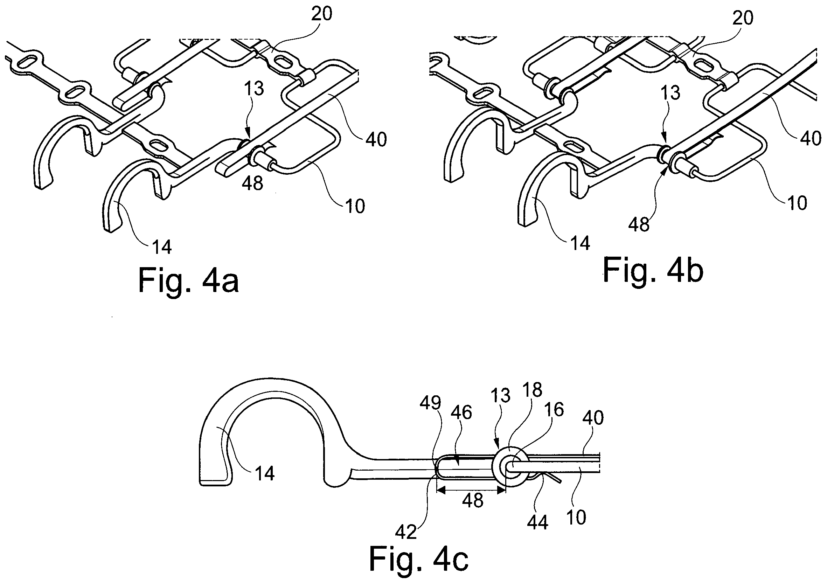

The gap 48 has a maximum width, as shown in Fig. 4a, in case no force is applied to the cushion mat 1**.** The contrary is shown in Fig. 4b, where the gap 48 has the width zero due to force applied to the cushion mat 1**.** In this case the predetermined maximum deflection value 60 is reached and a further deflection of the cushion mat 1 is stopped due to the limited movement of the deflection stopper 40. A significant further bending down of the wire springs 10 is prevented due to the higher modulus of elasticity of the deflection stopper 40. Fig. 4c is a side view of Fig. 4a to illustrate the arrangement of the deflection stopper 40 with respect to the wire spring 10.

The dimensions of the flat steel bands 40 or coated wires 30 as deflection stopper depend on the forces that are expected to act on the cushion mat 1**.** Due to the larger surface, the flat steel bands 40 may be preferred in cases were larger forces F, i.e. higher loads, are expected.

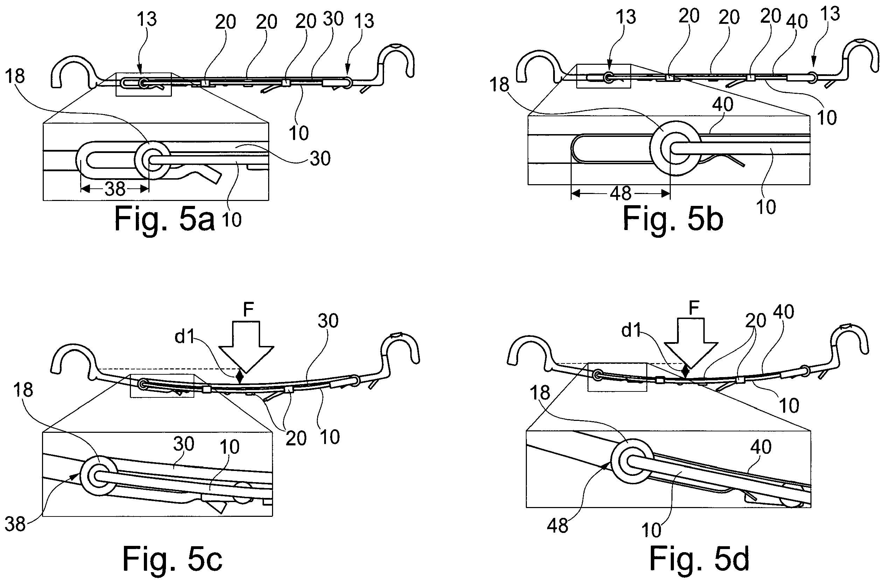

Fig. 5a shows a side view of the cushion mat 1 in case no force is applied, i.e. no bending down of the cushion mat 1 is given and coated wires 30 act as deflection stoppers 30. Fig. 5b shows the same for the second cushion mat 1 when steel bands 40 act as deflection stopper.

When a force F is applied to the cushion mat 1 the force causes a deflection of the cushion mat 1**.** In Fig. 5c and 5d the force F is such high that the deflection of the wire spring exceeds a predetermined maximum deflection value 60. Thus, the gaps 38, 48 of the respective elongated loops 36, 46 are closed completely. In this situation a further elongation of the wire spring 10 is restricted by the associated deflection stopper 30, 40 thus no further significant down-bending of the cushion mat 1 is possible.

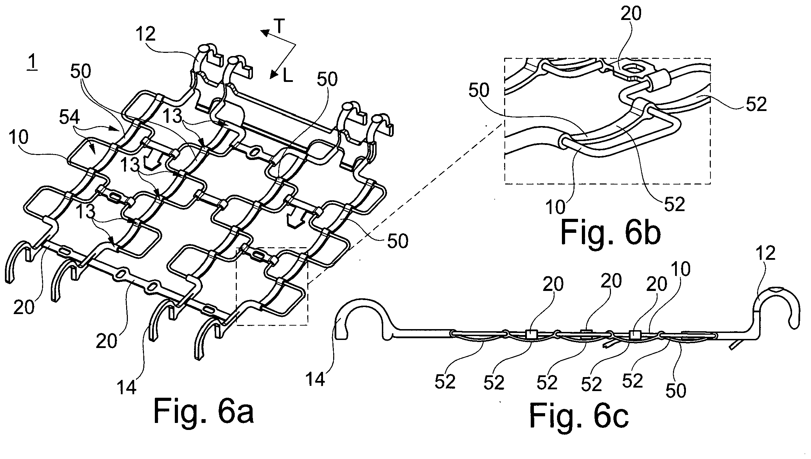

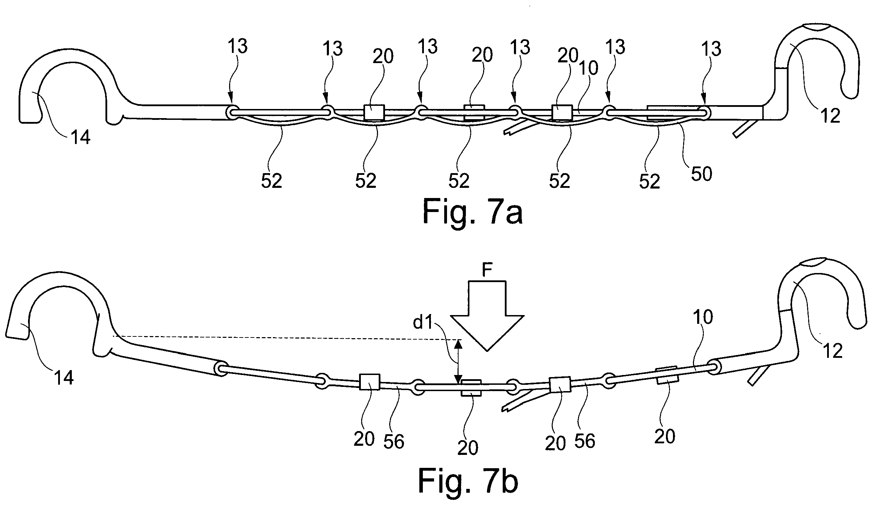

Figs. 6 and 7 show a third cushion mat 1, which is not according to the invention, in which the deflection stopper 50 is formed of a series of initially bowed plastic parts 52. The other elements of the cushion mat 1 are the same as in the first and second cushion mat 1**.** The bowed plastic parts 52 in this cushion mat 1 are arranged at interspaces 54 of the S-shaped windings of the wire spring 10. When a force F is applied to the cushion mat 1 the springs deflect and elongate and the bowed plastic parts 52 are strained. If the predetermined deflection value di of the cushion mat 1 is reached the bowed plastic parts 52 are strained to a flat shape. Such flat plastic parts 56 in a flat shape are shown in Fig. 7b^{.}

As schematically illustrated in Fig. 11a each of the bowed plastic parts 52 has a length L₁ that is longer than the length respectively distance L₀ of the joint points 13 of the bowed plastic parts 52 to one of the springs 10 or to any other element of the cushion mat 1**.**

As in the first and second cushion mat 1 the deflection stopper 50 in form of plastic parts 52, 54 is arranged along a spring 10 in lateral direction L. The plastic parts 52, 54 that form the deflection stopper 50 can be over-molded to the springs 10, preferably at the same time when the plastic connectors 20 are over-molded. In the shown cushion mat 1 each deflection stopper 50 comprises five bowed plastic parts 52 arranged in series. Each interspace 54 of the S-shaped windings of the spring 10 comprises one bowed plastic part 52. In other cushion mats 1 the number of bowed plastic parts 52 per spring 10 may vary, for example be 1, 2, 3, 4, 6, 7, 8 or more. Likewise, not every interspace 54 of the S-shaped windings of the spring 10 must include a bowed plastic part 52. Instead also initially flat plastic parts (not shown) may be used in between.

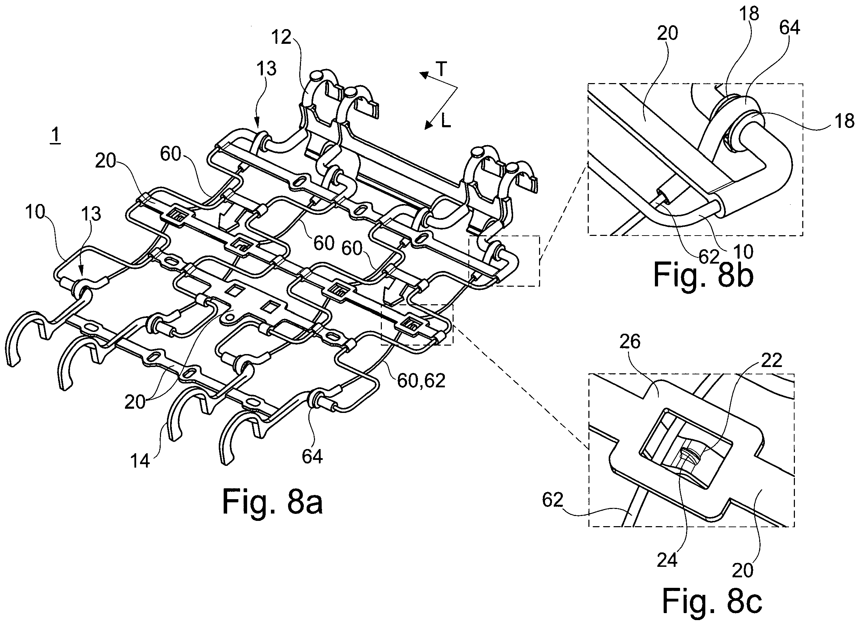

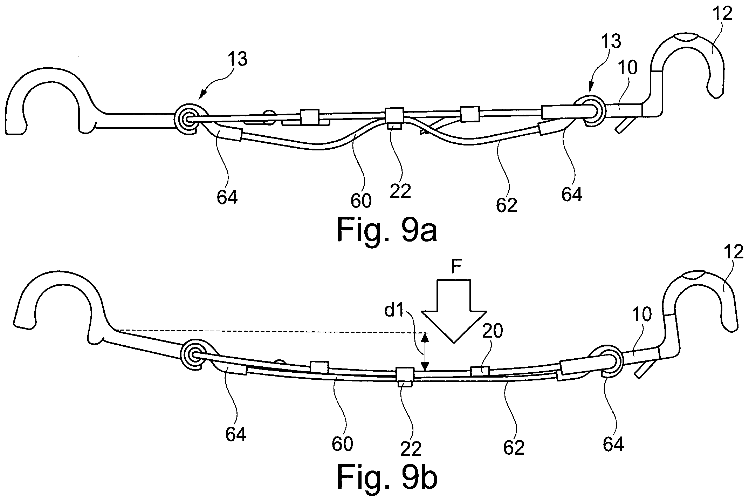

Figs. 8 and 9 show an embodiment of the cushion mat 1, according to the invention, in which the deflection stopper 60 is formed of a flexible cable 60. The flexible cable 60 comprises a cable part 62 and rigid hooks 64 at both ends of the cable part 62. The cable part 62 comprises a flexible cable like the inner cable of a Bowden cable arrangement. The cable part 62 can preferably be made of steel and can preferably be coated by a plastic material. The hooks 64 are preferably made of steel and may preferably coated with a plastic material in order to avoid any noise.

As it can be seen in Fig. 8b the hooks 64 of one deflection stopper 60 are hooked to the ends of the respective spring 10, particularly in-between two protrusions 18 that secure the hooks 64 at the respective spring 10.

As it can be seen in Fig. 8c the connector 20, preferably a central connector 20, may further comprise an attachment clip 22 that holds the cable part 62 of the cable 60 at the connector 20. Thus, the cable 60 is not significantly interfering the space below the cushion mat 1 when mounted in the seat frame. Further, this reduces any noise due to the moving cable part 62. The attachment clip may additionally comprise a securing hook 24 that allows the mounting of the cable part 62 at the attachment clip 22 but prevents an undesired release from the attachment clip 22. For an easier manufacturing, preferably by over-molding, the area 26 of connector 20 above the attachment clip is formed as a window to allow the insertion of an injection molding tool part. Further the window 26 allows the visual control of the correct mounting of the cable part 62 at the connector 20. The other elements of the cushion mat 1 are the same as in the first, second and third cushion mats 1**.**

The number of flexible cables 60 may vary as it is possible to use 2, 3, 4 or more in one cushion mat 1**.** The number of flexible cables 60 and their position in the cushion mat 1 can be selected for each particular case. They depend on the geometry of the cushion mat 1, in particular of the snake wire geometry of the springs 1, the available room where they can be assembled without interfering with other components, and on the seating comfort desired.

When a force F is applied to the cushion mat 1 the springs deflect, extend in length and the cable 60 is flattened. If the predetermined deflection value di of the cushion mat 1 is reached, as it can be seen in Fig. 7b, the cable 60 is fully stretched and adopts any further force F applied to the cushion mat 1 for limiting the deflection of the cushion mat 1**.** In this fully stretched condition the cushion mat 1 may preferably stretch up to 19,1 mm.

As schematically illustrated in Fig. 11a the cable 60 has a length L₁ that is longer than the length L₀ of the joint points 13 of the cable 60 to one of the springs 10 or to any other element of the cushion mat 1**.**

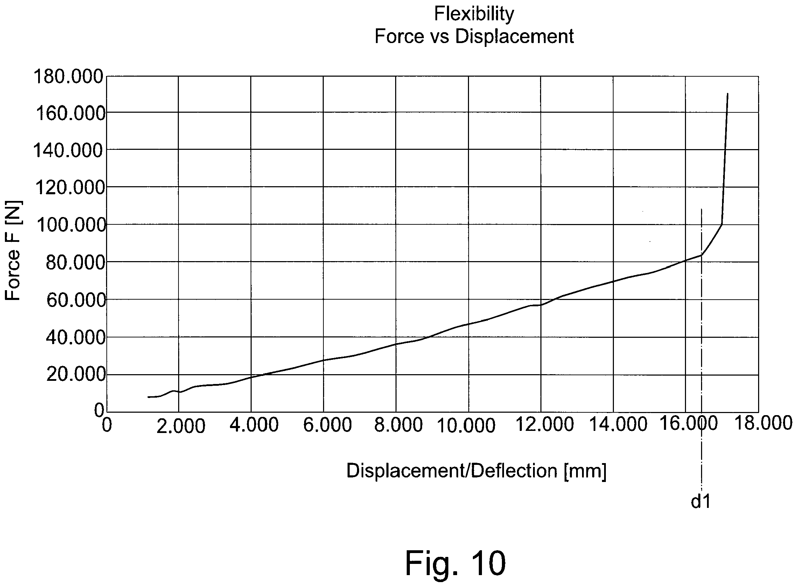

Fig. 10 shows a force-displacement-diagram illustrating the non-linear behavior of the deflection or displacement in response to an increasing force. If the displacement of the cushion mat 1 exceeds a predetermined deflection value di, the respective force F for a further displacement increases heavily. This means that after the displacement of the cushion mat 1 exceeds a predetermined deflection value di the cushion mat 1 withstands significantly higher loads and the increase in displacement is low. Generally speaking, the displacement or deflection of the cushion mat 1 is limited or almost stopped due to the deflection stopper 30, 40, 50 when a predetermined deflection value di is exceeded. Thus a progressive force / deflection behavior of the cushion mat 1 is achieved. The cushion mat 1 gets less elastic or harder when a predetermined deflection value di is exceeded. This prevents the cushion mat 1 from contacting any elements below the cushion mat 1 when the load of the passenger is high and heavy up-and-down movements of the vehicle occur.

### List of reference signs

- 1: cushion mat
- 10: wire spring
- 12, 14: hooks
- 13: joint points
- 16: enclosed portion of the wire spring
- 18: protrusions
- 20: plastic connectors
- 22: attachment clip
- 24: securing hook
- 26: window area
- 30: deflection stopper - steel wire
- 31: plastic material
- 32: U-shaped end portion
- 34: inward protrusion
- 36: elongated loop
- 37: loop
- 38: gap
- 39: arch
- 40: deflection stopper - steel plate
- 42: U-shaped end portion
- 44: inward protrusion
- 46: elongated loop
- 47: loop
- 48: gap
- 49: arch
- 50: deflection stopper
- 52: bowed plastic parts
- 54: interspaces
- 56: flat plastic parts
- 60: deflection stopper
- 62: cable part
- 64: hook
- di: predetermined deflection value
- F: force
- L: lateral direction
- L₀: length/distance of joint points
- L₁: length of deflection stopper
- T: transversal direction
- 16: enclosed portion of the wire spring
- 18: protrusions
- 20: plastic connectors
- 22: attachment clip
- 24: securing hook
- 26: window area
- 30: deflection stopper - steel wire
- 31: plastic material
- 32: U-shaped end portion
- 34: inward protrusion
- 36: elongated loop
- 37: loop
- 38: gap
- 39: arch
- 40: deflection stopper - steel plate
- 42: U-shaped end portion
- 44: inward protrusion
- 46: elongated loop
- 47: loop
- 48: gap
- 49: arch
- 50: deflection stopper
- 52: bowed plastic parts
- 54: interspaces
- 56: flat plastic parts
- 60: deflection stopper
- 62: cable part
- 64: hook
- d1: predetermined deflection value
- F: force
- L: lateral direction
- L₀: length/distance of joint points
- L₁: length of deflection stopper
- T: transversal direction

## Claims

1. Cushion mat (1) for integration into an automotive seat, comprising:
a. a set of springs (10) each spring (10) extending across the cushion mat;
b. connectors (20), connecting the springs (10) with each other to form the cushion mat (1); and
c. at least one deflection stopper (60) arranged for limiting the deflection of the cushion mat (1), when a predetermined deflection value (d1) is exceeded; **characterized in that**
d. the deflection stopper (60) comprises a flexible cable (60); and
e. has a length (L₁) that is longer than the length (L₀) of joint points (13) of the deflection stopper (60) to one of the springs (10) or to any other element of the cushion mat (1).

2. Cushion mat according to claim 1, wherein the deflection stopper (60) has a spring constant at least 10-times higher than the spring constant of one spring (10).

3. Cushion mat according to one of the claims 1 or 2, wherein the deflection stopper (60) is connected to one of the springs (10).

4. Cushion mat according to one of the claims 1 to 3, wherein the deflection stopper (60) is made of steel and is coated with a plastic material, to prevent noise emerging due to friction between the deflection stopper (60) and the spring (10).

5. Cushion mat according to one of the claims 1 to 4, wherein the deflection stopper (60) comprises at least one bowed flexible portion (62) that flattens upon deflection of the wire spring (10).

6. Cushion mat according to one of the claims 1 to 5, wherein the cushion mat (1) comprises one deflection stopper (60) per spring (10).

7. Cushion mat according to one of the claims 1 to 6, wherein the spring (10) is a metal wire spring and comprises generally S-shaped windings.

8. Cushion mat according to one of the claims 1 to 7, wherein the spring (10) comprises at least one pair of protrusions (18) facing each other at the same portion of the spring (10), for securing one end of the deflection stopper (60) at a predetermined position at the spring (10).

9. Cushion mat according to one of the claims 1 to 8, wherein the flexible cable (60) comprises a cable part (62) and rigid hooks (64) at both ends of the cable part (62).

10. Cushion mat according to claim 9, wherein a connector (20) comprises an attachment clip (22) that holds the cable part (62) of the cable (60) at the connector (20).

11. Cushion mat according to claim 10, wherein the attachment clip (22) additionally comprises a securing hook (24) that allows the mounting of the cable part (62) at the attachment clip (22) but prevents an undesired release from the attachment clip (22).

12. Cushion mat according to claim 11, wherein the area (26) of connector (20) above the attachment clip (22) is formed as a window to allow the visual control of the correct mounting of the cable part (62) at the connector (20).

13. Cushion mat according to claim 9, wherein the hooks (64) of one deflection stopper (60) are hooked to the ends of the respective spring (10).

14. Cushion mat according to claim 13, wherein the hooks (64) are hooked to the ends of the respective spring (10) in-between two protrusions (18) that secure the hooks (64) at the respective spring (10).

15. Method for the production of a cushion mat (1) for integration into an automotive seat, comprising the following steps:
a. injection molding of plastic material around a set of springs (10) to form a cushion mat (1) with plastic connectors (20);
b. providing a deflection stopper (60) by
c. mechanically connecting at least one deflection stopper (60) to at least one of the springs (10) or to any other element of the cushion mat (1), wherein the deflection stopper (60) comprises a flexible cable (60) and has a length (L₁) that is longer than the length (L₀) of the joint points (13) of the deflection stopper (60) to one of the springs or to any other element of the cushion mat (1).

## Patentansprüche

1. Polstermatte (1) zur Integration in einen Fahrzeugsitz, aufweisend:
a. einen Satz von Federn (10), wobei sich jede Feder (10) über die Polstermatte erstreckt;
b. Verbinder (20), die die Federn (10) miteinander verbinden, um die Polstermatte (1) zu bilden; und
c. mindestens einen Durchbiegungsstopper (60), der zur Begrenzung der Durchbiegung der Polstermatte (1) angeordnet ist, wenn ein vorbestimmter Durchbiegungswert (d1) überschritten wird; **dadurch gekennzeichnet, dass**
d. der Durchbiegungsstopper (60) ein flexibles Kabel (60) umfasst; und
e. eine Länge (L₁) hat, die länger als die Länge (L₀) von Verbindungspunkten (13) des Durchbiegungsstoppers (60) zu einer der Federn (10) oder zu einem anderen Element der Polstermatte (1) ist.

2. Polstermatte gemäß Anspruch 1, wobei der Durchbiegungsstopper (60) eine Federkonstante aufweist, die mindestens um das 10-fache höher ist als die Federkonstante einer Feder (10).

3. Polstermatte gemäß einem der Ansprüche 1 oder 2, wobei der Durchbiegungsstopper (60) mit einer der Federn (10) verbunden ist.

4. Polstermatte gemäß einem der Ansprüche 1 bis 3, wobei der Durchbiegungsstopper (60) aus Stahl hergestellt wird und mit einem Kunststoffmaterial beschichtet ist, um zu verhindern, dass aufgrund von Reibung zwischen dem Durchbiegungsstopper (60) und der Feder (10) Geräusche entstehen.

5. Polstermatte gemäß einem der Ansprüche 1 bis 4, wobei der Durchbiegungsstopper (60) mindestens einen gebogenen flexiblen Abschnitt (62) aufweist, der sich bei Auslenkung der Drahtfeder (10) streckt.

6. Polstermatte gemäß einem der Ansprüche 1 bis 5, wobei die Polstermatte (1) einen Durchbiegungsstopper (60) pro Feder (10) aufweist.

7. Polstermatte gemäß einem der Ansprüche 1 bis 6, wobei die Feder (10) eine Metalldrahtfeder ist und im Wesentlichen S-förmige Windungen aufweist.

8. Polstermatte gemäß einem der Ansprüche 1 bis 7, wobei die Feder (10) mindestens ein Paar von Vorsprüngen (18) aufweist, die einander an demselben Abschnitt der Feder (10) gegenüberliegen, um ein Ende des Durchbiegungsstoppers (60) an einer vorbestimmten Position an der Feder (10) zu befestigen.

9. Polstermatte gemäß einem der Ansprüche 1 bis 8, wobei das flexible Kabel (60) ein Kabelteil (62) und starre Haken (64) an beiden Enden des Kabelteils (62) aufweist.

10. Polstermatte gemäß Anspruch 9, wobei ein Verbinder (20) eine Befestigungsklammer (22) aufweist, die den Kabelteil (62) des Kabels (60) am Verbinder (20) hält.

11. Polstermatte gemäß Anspruch 10, wobei die Befestigungsklammer (22) zusätzlich einen Sicherungshaken (24) aufweist, der die Befestigung des Kabelteils (62) an der Befestigungsklammer (22) ermöglicht, aber ein unerwünschtes Lösen von der Befestigungsklammer (22) verhindert.

12. Polstermatte gemäß Anspruch 11, wobei der Bereich (26) des Verbinders (20) oberhalb der Befestigungsklammer (22) als ein Fenster ausgebildet ist, um die visuelle Kontrolle der korrekten Montage des Kabelteils (62) am Verbinder (20) zu ermöglichen.

13. Polstermatte gemäß Anspruch 9, wobei die Haken (64) eines Durchbiegungsstoppers (60) an den Enden der jeweiligen Feder (10) eingehakt sind.

14. Polstermatte gemäß Anspruch 13, wobei die Haken (64) an den Enden der jeweiligen Feder (10) zwischen zwei Vorsprüngen (18) eingehakt sind, die die Haken (64) an der jeweiligen Feder (10) sichern.

15. Verfahren zur Herstellung einer Polstermatte (1) zur Integration in einen Fahrzeugsitz, umfassend die folgenden Schritte:
a. Spritzgießen von Kunststoffmaterial um einen Satz von Federn (10), um eine Polstermatte (1) mit Kunststoffverbindern (20) zu bilden;
b. Bereitstellen eines Durchbiegungsstoppers (60) durch
c. mechanisches Verbinden mindestens eines Durchbiegungsstoppers (60) mit mindestens einer der Federn (10) oder mit einem anderen Element der Polstermatte (1), wobei der Durchbiegungsstopper (60) ein flexibles Kabel (60) aufweist und eine Länge (L₁) aufweist, die länger als die Länge (L₀) der Verbindungspunkte (13) des Durchbiegungsstoppers (60) mit einer der Federn oder mit einem anderen Element der Polstermatte (1) ist.

## Revendications

1. Assise de coussin (1) destinée à une intégration dans un siège automobile, comprenant :
a. un ensemble de ressorts (10), chaque ressort (10) s'étendant en travers de l'assise de coussin ;
b. des connecteurs (20), connectant les ressorts (10) les uns aux autres pour former l'assise de coussin (1) ; et
c. au moins une butée de fléchissement (60) agencée pour limiter le fléchissement de l'assise de coussin (1) lorsqu'une valeur de fléchissement prédéterminée (d1) est dépassée ; **caractérisée en ce que**
d. la butée de fléchissement (60) comprend un câble flexible (60) ; et
e. a une longueur (L₁) qui est supérieure à la longueur (L₀) entre des points d'articulation (13) de la butée de fléchissement (60) et l'un des ressorts (10) ou tout autre élément de l'assise de coussin (1).

2. Assise de coussin selon la revendication 1, dans laquelle la butée de fléchissement (60) a une constante élastique qui est au moins dix fois supérieure à la constante élastique d'un seul ressort (10).

3. Assise de coussin selon l'une des revendications 1 ou 2, dans laquelle la butée de fléchissement (60) est reliée à l'un des ressorts (10).

4. Assise de coussin selon l'une des revendications 1 à 3, dans laquelle la butée de fléchissement (60) est réalisée en acier et est revêtue d'une matière plastique, pour empêcher que le frottement entre la butée de fléchissement (60) et le ressort (10) ne fasse du bruit.

5. Assise de coussin selon l'une des revendications 1 à 4, dans laquelle la butée de fléchissement (60) comprend au moins une partie flexible cintrée (62) qui s'aplatir au fléchissement du fil du ressort (10).

6. Assise de coussin selon l'une des revendications 1 à 5, dans laquelle l'assise de coussin (1) comprend une seule butée de fléchissement (60) par ressort (10).

7. Assise de coussin selon l'une des revendications 1 à 6, dans laquelle le ressort (10) est un ressort en fil métallique et comprend des sinuosités en forme approximative de S.

8. Assise de coussin selon l'une des revendications 1 à 7, dans laquelle le ressort (10) comprend au moins une paire de bossages (18) tournés l'un vers l'autre au niveau de la même partie du ressort (10), pour solidariser une extrémité de la butée de fléchissement (60) à une position prédéterminée sur le ressort (10).

9. Assise de coussin selon l'une des revendications 1 à 8, dans laquelle le câble flexible (60) comprend une partie de câble (62) et des crochets rigides (64) à l'une et l'autre extrémité de la partie de câble (62).

10. Assise de coussin selon la revendication 9, dans laquelle un connecteur (20) comprend une agrafe d'attache (22) qui maintient la partie de câble (62) du câble (60) au niveau du connecteur (20).

11. Assise de coussin selon la revendication 10, dans laquelle l'agrafe d'attache (22) comprend en outre un crochet de solidarisation (24) qui permet le montage de la partie de câble (62) sur l'agrafe d'attache (22) mais empêche qu'il ne se détache par inadvertance de l'agrafe d'attache (22).

12. Assise de coussin selon la revendication 11, dans laquelle la zone (26) du connecteur (20) au-dessus de l'agrafe d'attache (22) est réalisée sous forme d'une fenêtre pour permettre le contrôle visuel du montage correct de la partie de câble (62) sur le connecteur (20).

13. Assise de coussin selon la revendication 9, dans laquelle les crochets (64) d'une seule butée de fléchissement (60) sont accrochés aux extrémités du ressort respectif (10).

14. Assise de coussin selon la revendication 13, dans laquelle les crochets (64) sont accrochés aux extrémités du ressort respectif (10) dans l'espace compris entre deux bossages (18) qui solidarisent les crochets (64) au ressort respectif (10).

15. Procédé de fabrication d'une assise de coussin (1) destinée à être intégrée dans un siège d'automobile, comprenant les étapes suivantes :
a. moulage par injection de matière plastique autour d'un ensemble de ressorts (10) pour former une assise de coussin (1) avec des connecteurs en plastique (20) ;
b. mise en place d'une butée de fléchissement (60) par
c. liaison mécanique d'au moins une butée de fléchissement (60) à au moins l'un des ressorts (10) ou à tout autre élément de l'assise de coussin (1), la butée de fléchissement (60) comprenant un câble flexible (60) et ayant une longueur (L₁) qui est supérieure à la longueur (L₀) entre les points d'articulation (13) de la butée de fléchissement (60) et l'un des ressorts ou tout autre élément de l'assise de coussin (1).
